# EUROPÄISCHE PATENTSCHRIFT

(11) **EP 0 421 132 B1**
(45) Veröffentlichungstag und Bekanntmachung des Hinweises auf die Patenterteilung: **09.02.1994**
(21) Anmeldenummer: 90116938.3
(22) Anmeldetag: 04.09.1990
(51) Int. Cl.: F16H 61/26, F16D 3/28, F16H 59/02

(54) **Kraftübertragungsgelenk für das Schaltgestänge eines Kraftfahrzeuggetriebes**
Force-transmitting joint for a gearlinkage of a motor vehicle gearbox
Joint de transmission de puissance pour une tringlerie de commande de boîte de vitesses d'une automobile

(30) Priorität: 30.09.1989 DE 3932815
(43) Veröffentlichungstag der Anmeldung: 10.04.1991
(73) Patentinhaber: DIEHL GMBH & CO., 90478 Nürnberg (DE)
(72) Erfinder: Pepping, Karl-Heinz, D-5372 Schleiden (DE); Engel, Michael, D-5541 Neuendorf (DE); Hausmann, Hubert, D-5353 Mechernich (DE); Gebhardt, Günther, D-5536 Stadtkyll (DE)

(56) Entgegenhaltungen:
- EP-A- 0 277 324
- DE-A- 3 101 671
- DE-A- 3 806 522

## Beschreibung

Die Erfindung bezieht sich auf ein Kraftübertragungsgelenk für das Schaltgestänge eines Kraftfahrzeuggetriebes nach dem Oberbegriff des Anspruches 1.

Aus der DE-B-38 06 522 ist ein Kraftübertragungsgelenk für das Schaltgestänge eines Kraftfahrzeuggetriebes bekannt. In einer rechtwinkligen Ausnehmung eines Kreuzgelenkekäfigs ist ein Kulissenstein über ein Federstahlblech in den Wählrichtungen eines Kraftfahrzeuggetriebes gehalten. Rechtwinklig dazu, und zwar in den Schaltrichtungen des Kraftfahrzeuggetriebes sind die Bewegungen des Kulissensteins durch gummielastische Dämpfer gedämpft.

Aufgrund von Fertigungstoleranzen des Kulissensteins, des Federbleches und des Kreuzgelenkkäfigs liegt im ungünstigsten Fall bereits im Neuzustand des Kraftübertragungsgelenks ein Wählspiel vor. Dies erhöht sich im Laufe der Zeit. Ein präzises Wählgefühl beim Auswählen der Schaltstufen bzw. Gänge eines Kraftfahrzeuggetriebes ist daher beeinträchtigt.

Weiterhin ist die Fertigung des Kraftübertragungsgelenkes aufgrund von mechanischen Bearbeitungen und Biegevorgänge der Teile des Kreuzgelenkes kostenintensiv.

Der Erfindung liegt die Aufgabe zugrunde, ein Kraftübertragungsgelenk vorzuschlagen, das in Wählrichtung ein Wählspiel vermeidet und eine kostengünstige Fertigung ermöglicht.

Die Erfindung löst diese Aufgabe gemäß den kennzeichenden Merkmalen des Anspruches 1.

Vorteilhafte Weiterbildungen der Erfindung sind den Unteransprüchen zu entnehmen.

Gemäß der Erfindung liegt bei dem Kraftübertragungsgelenk weder im Neuzustand noch nach längerem Betrieb ein Wählspiel vor.

Die Fertigung der Teile des Kraftübertragungsgelenkes ist kostengünstig. Der Kreuzgelenkkäfig ist im Feingußverfahren aus verzinktem Stahl herstellbar, während der Kulissenstein aus Kunststoff besteht und im Spritzgußverfahren herstellbar ist. Eine Nachbearbeitung der Kupplungsflächen entfällt, da der Kulissenstein durch eine Feder selbstnachstellend im Kreuzgelenkkäfig befestigt ist.

Bei der vorgeschlagenen Werkstoffpaarung entfällt auch ein Schmiermittel, was bei dem bekannten Kraftübertragungsgelenk noch erforderlich war. Auch liegt aufgrund der gewählten Werkstoffpaarung Korrosionsfreiheit vor.

Wesentlich ist auch die Körperschall-Isolation im Kreuzgelenk, wodurch die Geräuschemission im Fahrgastraum vermindert ist.

Zur kostengünstigen Fertigung des Kraftübertragungsgelenkes tragen die Unteransprüche bei.

Ein Ausführungsbeispiel der Erfindung ist in der Zeichnung dargestellt. Es zeigt:
- Figuren 1 und 2: ein Kraftübertragungsgelenk in verschiedenen Ansichten und Schnitten,
- Figur 3: einen Kreuzgelenkkäfig nach den Figuren 1 und 2,
- Figur 4: ein Schaltgestänge eines Kraftfahrzeuggetriebes mit dem Kraftübertragungsgelenk nach den Figuren 1 und 2.

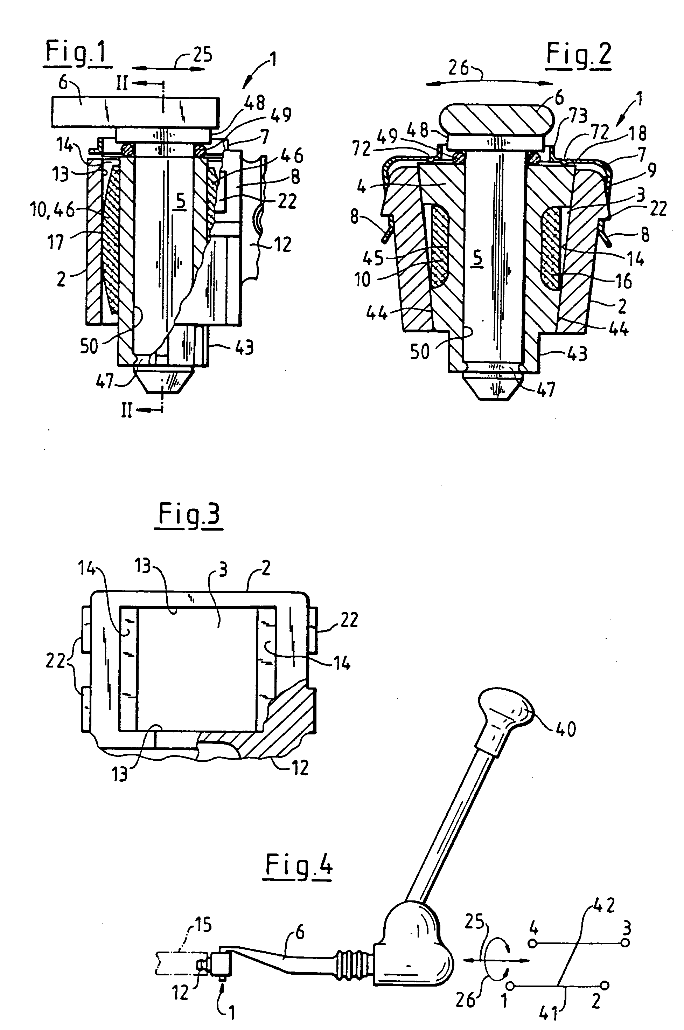

Das Kraftübertragungsgelenk 1 besteht aus einem Kreuzgelenkkäfig 2 aus verzinktem Stahl mit einer rechtwinkligen Ausnehmung 3 mit zwei parallelen, koaxialen Flächen 13 und zwei Keilflächen 14, einem entsprechend ausgebildeten Kulissenstein 4 aus einem hochverschleißfesten Kunststoff - hergestellt aus einer Kunststofflegierung auf der Basis von Polyamiden - mit Zapfen 5 und damit verbundener Schaltstange 6, einer Bügelfeder 7 mit Rastklammern 8 und Öffnungen 9, einem hülsenförmigen gummielastischen Dämpfer 10 mit Stegen 16 und aus einem getriebeseitigen Kupplungsstück 12 für einen strichpunktiert gezeichneten Hebel 15 (Figur 4).

Der Kulissenstein 4 besitzt in seinen Keilflächen 14 Ausnehmungen 45 für die Stege 16 zur form- und kraftschlüssigen Befestigung des Dämpfers 10 am Kulissenstein 4. Mit dem Kulissenstein 4 einstückige federnde Zungen 43 rasten den Zapfen 5 über eine Nut 47 und halten diesen über einen Bund 48 der Schaltstange 6 und einen Gummiring 49 spielfrei in einer Bohrung 50 des Kulissensteins 4. Seine Lagerung im Kreuzgelenkkäfig 2 ist durch einen Paßsitz der konischen Flächen 14,44 und durch die Bügelfeder 7 spielfrei.

Der Dämpfer 10 weist zwei Kugelabschnitte 46 auf, die in einer Ruhestellung 42 des Schaltschemas 41 (Figur 4), und zwar in den Schaltrichtungen 25 zum Schalten der Gänge 1 bzw. 2 bis 4 mit einem kleinen Abstand 17, also mit Spiel zu den Flächen 13 versehen sind. Dieser Abstand 17 liegt an beiden Kugelabschnitten 46 vor.

Die Öffnungen 9 der Bügelfeder 7 sind an Rastnocken 22 unter Vorspannung der Bügelfeder 7 eingerastet.

Sicken 72 an einer Stirnfläche 18 ergeben definierte Übertragungsstellen für die Federkraft am Kulissenstein 4. Dadurch ist der Kulissenstein 4 im Kreuzgelenkkäfig 2 unter Vorspannung spielfrei in den Wählrichtungen 26 (Figur 4) zur Auswahl der Gänge 1, 2 oder 3, 4 gelagert.

Zur Versteifung der Bügelfeder 7 ist ein Ringbund 73 vorgesehen.

Beim Schalten der Gänge 1 bis 4 in den Schaltrichtungen 25 werden Schaltstöße und Vibrationen aufgrund der freien Abstände 17 und des Dämpfers 10 weitgehend eliminiert. Der Kulissenstein 4 trägt dazu mit seinen Körperschalldämpfungseigenschaften bei. Die Kombination von Dämpfer 10 und Kulissenstein 4 mit den Abständen 17 gewährleistet auch eine gute Körperschall-Isolation mit geringer Geräuschemission, verursacht durch Fahrgestell und Antriebseinheit.

Der Abstand 17 ist variierbar bis auf Null.

## Patentansprüche

1. Kraftübertragungsgelenk für das Schaltgestänge eines Kraftfahrzeuggetriebes, bestehend aus einem Kreuzgelenkkäfig (2) mit einer Ausnehmung (3) zur verdrehfesten Lagerung eines darin, mittels eines Haltegliedes (7) fixierten Kulissensteins (4) zur Aufnahme eines Zapfens (5) einer Schaltstange (6),
aus gummielastichen Dämpfern (10) zwischen dem Kulissenstein (4) und den Flächen (13) der Ausnehmung (3) in den Schaltrichtungen (25) und aus einer ungedämpften Lagerung des Kulissensteines (4) in der Ausnehmung (3) in den Wählrichtungen (26),
gekennzeichnet durch
eine Konuskupplung (14,44) des Kulissensteines (4) und des Kreuzgelenkkäfigs (2) in den Wählrichtungen (26), wobei das Halteglied (7) für den Kulissenstein (4) in dem Kreuzgelenkkäfig (2) selbstnachstellend ausgebildet ist.

2. Kraftübertragungsgelenk nach Anspruch 1,
dadurch gekennzeichnet,
daß die Konuskupplung (14,44) aus einer Werkstoffpaarung mit geräuschdämpfenden und wartungsfreien Eigenschaften, wie hochverschleißfestem oder korrosionsgeschütztem Kunststoff für den Kulissenstein (4) und korrosionsfreiem Stahl für den Kreuzgelenkkäfig (2) besteht.

3. Kraftübertragungsgelenk nach Anspruch 2,
dadurch gekennzeichnet,
daß der Kunststoff eine Kunststofflegierung auf der Basis von Polyester oder Polyamiden ist und der korrosionsfreie Stahl aus einem chromlegierten Stahl oder aus einem verzinkten Stahl besteht.

4. Kraftübertragungsgelenk nach Anspruch 1,
dadurch gekennzeichnet,
daß der Kulissenstein (4) zur einschnappbaren Befestigung eines Zapfens (5) einer Schaltstange (6) einstückige, federnd ausgebildete Zungen (43) aufweist, die in eine Nut (47) des Zapfens (5) greifen.

5. Kraftübertragungsgelenk nach Anspruch 1,
dadurch gekennzeichnet,
daß das selbstnachstellende Halteglied (7) als zweiarmige Bügelfeder (7) mit Rastklammern (8) und Öffnungen (9) ausgebildet ist,
die Bügelfeder (7) unter Vorspannung an einer Stirnfläche (18) des Kulissensteins (4) anliegt und
die Rastklammern (8) an seitlich angeordneten Rastnocken (22) des Kulissensteines (4) eingehakt sind.

6. Kraftübertragungsgelenk nach Anspruch 5,
dadurch gekennzeichnet,
daß die Bügelfeder (7) im Bereich der Stirnfläche (18) zwei Sicken (72) aufweist.

7. Kraftübertragungsgelenk nach Anspruch 1,
dadurch gekennzeichnet,
daß der Kulissenstein (4) zwei Ausnehmungen (3) zur form- und kraftschlüssigen Befestigung des Dämpfers (10) aufweist.

8. Kraftübertragungsgelenk nach Anspruch 7,
dadurch gekennzeichnet,
daß der Dämpfer (10) etwa hülsenförmig ausgebildet ist, zwei Kugelabschnitte (46) aufweist, die mit den Flächen (13) des Kreuzgelenkkäfigs (2) zusammenwirken und zwei Stege (16) besitzt, die in die Ausnehmung (3) einschnappbar ausgebildet sind.

## Claims

1. A transmission joint for the shift linkage of a motor-vehicle gear, consisting of a universal joint cage (2) with a recess (3) for the torsionally-fast mounting of a sliding block (4), fixed therein by means of a retaining member (7), for the reception of a pin (5) of a shift rod (6), of rubber-elastic dampers (10) between the sliding block (4) and the surfaces (13) of the recess (3) in the shift directions (25) and of an undamped mounting of the sliding block (4) in the recess (3) in the selection directions (26), characterised by a taper coupling (14, 44) of the sliding block (4) and of the universal joint cage (2) in the selection directions (26), in which respect the retaining member (7) for the sliding block (4) in the universal joint cage (2) is self-adjusting in design.

2. A transmission joint according to claim 1, characterised in that the taper coupling (14, 44) consists of a material pairing having noise-damping and maintenance-free properties, such as highly wear-resistant or corrosion-protected plastic for the sliding block (4) and corrosionless steel for the universal joint cage (2).

3. A transmission joint according to claim 2, characterised in that the plastic is a plastic alloy on the basis of polyester or polyamides and the corrosionless steel consists of a chromium-alloyed steel or of a galvanized steel.

4. A transmission joint according to claim 1, characterised in that the sliding block (4) for the snap-in fastening of a pin (5) of a shift rod (6) has one-piece resiliently designed tongues (43) which engage into a groove (47) of the pin (5).

5. A transmission joint according to claim 1, characterised in that the self-adjusting retaining member (7) is designed as a two-armed yoke spring (7) having detent clips (8) and apertures (9), the yoke spring (7) butts under bias against an end surface (18) of the sliding block (4) and the detent clips (8) are hooked-in on laterally arranged detent dogs (22) of the sliding block (4).

6. A transmission joint according to claim 5, characterised in that the yoke spring (7) has two corrugations (72) in the region of the end surface (18).

7. A transmission joint according to claim 1, characterised in that the sliding block (4) has two recesses (3) for the form-locking and force-locking fastening of the damper (10).

8. A transmission joint according to claim 7, characterised in that the damper (10) is approximately sleeve-shaped in design, has two ball portions (46) which cooperate with the surfaces (13) of the universal joint cage (2) and possesses two webs (16) which are designed so that they can be snapped into the recess (3).

## Revendications

1. Articulation pour la tringlerie de commande d'une boîte de vitesse de véhicule automobile, se composant
d'une cage de joint à la cardan (2) comportant une cavité (3) pour le montage fixe en rotation d'un coulisseau (4) qui y est fixé au moyen d'un élément de fixation (7) pour recevoir le tenon d'une tringle de commande (6),
d'amortisseurs en caoutchouc élastique (10) entre le coulisseau (4) et les surfaces (13) de la cavité (3) dans les directions de sélection (25), et
d'un support non amorti du coulisseau (4) dans la cavité (3) dans les directions de sélection (26),
caractérisée par un accouplement conique (14, 44) du coulisseau (4) et de la cage de joint à la cardan (2) dans les sens de sélection (26), l'élément de maintien (7) pour le coulisseau (4) étant formé avec rattrapage de jeu automatique dans la cage de joint à la cardan (2).

2. Articulation de transmission selon la revendication 1, caractérisée en ce que l'accouplement conique (14, 44) se compose d'une association de matériaux possédant des propriétés d'amortissement du bruit et ne nécessitant pas d'entretien, tels qu'une matière synthétique hautement résistante à l'usure et à la corrosion pour le coulisseau (4) et en acier inoxydable pour la cage de joint à la cardan (2).

3. Articulation de transmission selon la revendication 2, caractérisée en ce que la matière synthétique est constituée à base de polyester ou de polyamide et en ce que l'acier inoxydable est constitué d'un acier au chrome ou d'un acier galvanisé.

4. Articulation de transmission selon la revendication 1, caractérisée en ce que coulisseau (4) présente, pour la fixation encliquetable d'un tenon (5) d'une tringle de commande (6), des languettes élastiques, venues d'une seule pièce (43), qui s'engagent dans une gorge (47) du tenon (5).

5. Articulation de transmission selon la revendication 1, caractérisée en ce que l'élément de support auto-réglable (7) se trouve sous forme d'un ressort en forme d'étrier (7) à deux branches comportant des crampons de fixation (8) et des ouvertures (9), que le ressort en étrier (7) se présente sous pré-tension sur une surface frontale (18) du coulisseau (4) et que les crampons de fixation mordent dans des saillies d'arrêt du coulisseau (4), disposées latéralement (22).

6. Articulation de transmission selon la revendication 5, caractérisée en ce le ressort (7) comporte deux moulures (72) dans la zone de sa surface frontale (18).

7. Articulation de transmission selon la revendication 1, caractérisée en ce que le coulisseau (4) comporte deux cavités (3) pour la fixation par concordance de forme et à force de l'amortisseur (10)

8. Articulation de transmission selon la revendication 7, caractérisée en ce que l'amortisseur (10) formé pratiquement en forme de douille, présente deux sections sphériques (46) qui coopèrent avec les surfaces (13) de la cage de joint à la cardan (2) et possède deux nervures (16) qui sont formées de façon à pouvoir s'encliqueter dans la cavité (3).
